# EUROPÄISCHE PATENTSCHRIFT

(11) **EP 1 076 945 B1**
(45) Veröffentlichungstag und Bekanntmachung des Hinweises auf die Patenterteilung: **11.09.2002**
(21) Anmeldenummer: 99930990.9
(22) Anmeldetag: 03.05.1999
(51) Int. Cl.: H04B 7/26, H04Q 7/36

(54) **VERFAHREN UND BASISSTATIONSSYSTEM ZUR KANALZUTEILUNG IN EINEM FUNK-KOMMUNIKATIONSSYSTEM**
METHOD AND BASE STATION SYSTEM FOR ASSIGNING CHANNELS IN A RADIO COMMUNICATIONS SYSTEM
PROCEDE ET SYSTEME DE STATIONS DE BASE POUR AFFECTER DES CANAUX DANS UN SYSTEME DE RADIOCOMMUNICATION

(30) Priorität: 08.05.1998 DE 19820736
(43) Veröffentlichungstag der Anmeldung: 21.02.2001
(73) Patentinhaber: SIEMENS AKTIENGESELLSCHAFT, 80333 München (DE)
(72) Erfinder: DILLINGER, Markus, D-81737 München (DE); SCHINDLER, Jürgen, D-81369 München (DE)
(86) Internationale Anmeldenummer: DE9901301
(87) Internationale Veröffentlichungsnummer: WO99059267

(56) Entgegenhaltungen:
- EP-A- 0 536 864
- EP-A- 0 720 405
- WO-A-91/01073
- WO-A-97/12489
- WO-A-98/29988
- KATZELA I ET AL: "CHANNEL ASSIGNMENT SCHEMES FOR CELLULAR MOBILE TELECOMMUNICATION SYSTEMS: A COMPREHENSIVE SURVEY" IEEE PERSONAL COMMUNICATIONS, Bd. 3, Nr. 3, 1. Juni 1996 (1996-06-01), Seiten 10-31, XP000593925 ISSN: 1070-9916 in der Anmeldung erwähnt
- FONG T K ET AL: "RADIO RESOURCE ALLOCATION IN FEXED BROADBAND WIRELESS NETWORKS" IEEE TRANSACTIONS ON COMMUNICATIONS, Bd. 46, Nr. 6, 1. Juni 1998 (1998-06-01), Seiten 806-818, XP000779684 ISSN: 0090-6778

## Beschreibung

Die Erfindung betrifft ein Verfahren und ein Basisstations-system zur Kanalzuteilung in einem Funk-Kommunikationssystem, insbesondere in einem Mobilfunksystem mit breitbandigen Kanälen, in denen Signale nach einem TD/CDMA-Teilnehmerseparierungsverfahren übertragen werden.

In der EP 0 536 864 A und der WO 97/12489 sind Mobilfunksysteme beschrieben, bei denen Funkzellen, die dasselbe Frequenzband nutzen, jeweils separate Zeitschlitze aufweisen. Die Aufteilung der Zeitschlitze erfolgt dabei sowohl für die Abwärtsrichtung als auch für die Aufwärtsrichtung.

In Funk-Kommunikationssystemen werden Informationen (beispielsweise Sprache, Bildinformationen oder andere Daten) mit Hilfe von elektromagnetischen Wellen über eine Funkschnitt stelle zwischen sendender und empfangender Funkstation (Basisstation bzw. Mobilstation) übertragen. Das Abstrahlen der elektromagnetischen Wellen erfolgt dabei mit Trägerfrequenzen, die in dem für das jeweilige System vorgesehenen Frequenzband liegen. Für zukünftige Mobilfunksysteme mit CDMAoder TD/CDMA-Übertragungsverfahren über die Funkschnittstelle, beispielsweise das UMTS (Universal Mobile Telecommunication System) oder andere Systeme der 3. Generation sind Frequenzen im Frequenzband von ca. 2000 MHz vorgesehen.

Frequenzmultiplex (FDMA), Zeitlagenmultiplex (TDMA) oder ein als Codemultiplex (CDMA) bekanntes Verfahren dienen der Unterscheidung der Signalquellen und damit zur Auswertung der Signale. Aus US 5 719 859 A ist ein Funk-Kommunikationssystem mit TDMA-Übertragungsverfahren bekannt. Ein diese Verfahren kombinierendes Funk-Kommunikationssystem ist aus DE 195 49 148 A1 bekannt. Das GSM-Mobilfunksystem nutzt hingegen nur eine Kombination aus FDMA und TDMA. Beide Systeme nutzen einen Frequenzwiederholungswert (frequency reuse cluster) von wesentlich größer als eins, so daß die Interferenzen zwischen benachbarten Basisstationen durch die FDMA-Komponente verringert werden. Kanalzuteilungsverfahren beziehen sich bei diesen Systemen jeweils ausschließlich auf die FDMA-Komponente.

Der Erfindung liegt die Aufgabe zugrunde, ein Verfahren und ein Basisstationssystem anzugeben, bei denen die Interferenzen verringert werden, auch wenn der Frequenzwiederholungswert gegen eins geht. Diese Aufgabe wird durch das Verfahren mit den Merkmalen des Anspruchs 1 und das Basisstationssystem mit den Merkmalen des Anspruchs 9 gelöst. Vorteilhafte Weiterbildungen sind den ünteransprüchen zu entnehmen.

Erfindungsgemäß werden ein erster Teil der Zeitschlitze einer ersten Basisstation und ein zweiter Teil der Zeitschlitze einer zweiten Basisstation zugeteilt. Ohne die Zuhilfenahme einer FDMA-Komponente, d.h. im Extremfall für ein Funk-Kommunikationssystem mit einem Frequenzwiederholungswert von eins, werden somit die Interferenzen zwischen benachbarten Basisstationen extrem verringert. Bei fester Zuteilung an zwei Basisstationen ergibt sich somit ein Zeitcluster von zwei. Werden weitere Teile der Zeitschlitze an weitere Basisstationen zugeteilt, dann kann ein Zeitcluster von drei, vier etc. eingestellt werden.

Im Gegensatz zu bekannten Funk-Kommunikationssystemen wird die Ressource "Zeitschlitz" innerhalb des System aufgeteilt. Dies ist besonders in breitbandigen Funk-Kommunikationssystemen von Vorteil, bei denen nur wenige Frequenzbänder zur Verfügung stehen, z.B. im "unpaired-band" der 3. Mobilfunkgeneration. Ein vorteilhafter Anwendungsfall ist ein Mobilfunksystem mit einem TDD-Übertragungsverfahren (time division duplex) zwischen Mobilstationen und Basisstationen, bei dem Zeitschlitze eines Frequenzbandes für Aufwärts- und Abwärtsrichtung benutzt werden.

Nach einer vorteilhaften Weiterbildung der Erfindung ist die Zuteilung der ersten und zweiten Teile der Zeitschlitze exklusiv, so daß die Basisstationen nur in den ihnen zugeteilten Zeitschlitzen senden bzw. empfangen. In diesem Fall werden die Interferenzen zwischen den Basisstationen deutlich verringert.

Einen großen Vorteil bezüglich die bestmöglichen Ausnutzung der funktechnischen Ressourcen bringt ein hybrides Kanalzuteilungsverfahren mit sich. Dabei werden die ersten und zweiten Teile der Zeitschlitze fest zugeteilt und ein dritter Teil der Zeitschlitze dynamisch zugeteilt. Das hybride Kanalzuteilungsverfahren vereint die Vorteile des festen und dynamischen Kanalzuteilungskonzeptes, siehe dazu I. Katzela und M. Naghshineh, "Channel Assignment Schemes for Cellular Mobile Telecommunication Systems: A Comprehensive Survey", IEEE Personal Communications, Juni 1996, S. 10-31. Durch die teilweise feste Zuteilung wird der Signalisierungsaufwand gering gehalten und durch die teilweise dynamische Zuteilung hohe Datenrate auf einzelne Zellen konzentriert. Letzteres ist insbesondere möglich, wenn der dritte Teil der Zeitschlitze mehreren Basisstationen lastbezogen zuteilbar ist. Somit können auch hohe Datenraten, z.B. 384 kbps, einem einzelnen Teilnehmer zugeordnet werden, da die funktechnischen Ressourcen nicht zu sehr zersplittert werden.

Die Zuteilung der Zeitschlitze des dritten Teils erfolgt vorteilhafterweise dezentral, d.h. durch die Basisstation. Es kann auch vorgesehen sein, daß einzelne Zeitschlitze von mehreren Basisstationen gleichzeitig genutzt werden.

Nach vorteilhaften Ausprägungen der Erfindung werden der Mobilstation ein Zeitschlitz des ersten Teils mit höherer Priorität als ein Zeitschlitz des dritten Teils zuteilt. Damit stehen für den Bedarfsfall mit hoher Wahrscheinlichkeit dynamisch zuteilbare Ressourcen zur Verfügung. Weiterhin erfolgt eine Zuteilung eines Zeitschlitzes des dritten Teils für die Mobilstation mit höherer Priorität als eine Übergabe (Handover) zu einer benachbarten Basisstation.

Damit für ein Funkverbindung ein adäquater Zeitschlitz zugeteilt werden kann, werden durch die Basisstation und/oder die Mobilstation Interferenzmessungen durchgeführt, so daß ein geeigneter Zeitschlitz für eine Verbindung ausgewählt wird bzw. bei einer Freigabe eines Zeitschlitzes durch eine andere Verbindung eine Übergabe der Verbindung zu diesem Zeitschlitz ausgelöst wird.

Die zeitliche Orthogonalität der Benutzung von Zeitschlitzen für unterschiedliche Zellen kann auf die Nutzinformations-übertragung eingeschränkt werden. Vorteilhafterweise wird in Abwärtsrichtung ein Organisationskanal und/oder in Aufwärtsrichtung ein Zugriffskanal für mehrere Basisstationen in jeweils einem gemeinsamen Zeitschlitz eingerichtet. Diese Maßnahmen verbessern die Ressourcenausnutzung.

Im folgenden wird die Erfindung anhand eines Ausführungsbeispiels bezugnehmend auf zeichnerische Darstellungen näher erläutert.

Dabei zeigen
- FIG 1: ein Blockschaltbild eines Mobilfunksystems,
- FIG 2: eine schematische Darstellung der Rahmenstruktur des TDD-Übertragungsverfahrens,
- FIG 3: eine schematische Darstellung der Kanalzuteilung für mehrere Basisstationen,
- FIG 4: ein Interferenzszenario für ein Mikrozellenmodell,
- FIG 5: ein vereinfachtes Blockschaltbild einer Basisstation,
- FIG 6: ein Ablaufdiagramm der Kanalzuteilung.

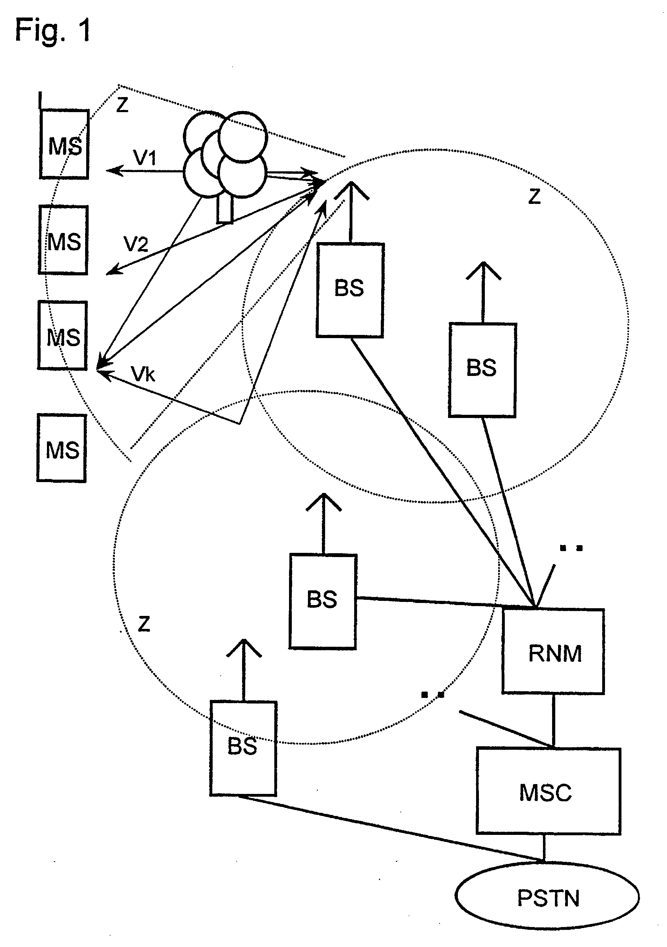

Das in FIG 1 dargestellte Mobilfunksystem als Beispiel eines Funk-Kommunikationssystem besteht aus einer Vielzahl von Mobilvermittlungsstellen MSC, die untereinander vernetzt sind bzw. den Zugang zu einem Festnetz PSTN herstellen. Weiterhin sind diese Mobilvermittlungsstellen MSC mit jeweils zumindest einer Einrichtung RNM zum Zuteilen von funktechnischen Ressourcen verbunden. Jede dieser Einrichtungen RNM ermöglicht wiederum eine Verbindung zu zumindest einer Basisstation BS. Eine solche Basisstation BS kann über eine Funkschnittstelle eine Verbindung zu weiteren Funkstationen, z.B. Mobilstationen MS oder anderweitigen mobilen und stationären Endgeräten aufbauen. Durch jede Basisstation BS wird zumindest eine Funkzelle Z gebildet. Bei einer Sektorisierung oder bei hierarchischen Zellstrukturen werden pro installierter Basisstation BS auch mehrere Funkzellen Z versorgt. Im Sinne der Erfindung bildet eine installierte Basisstation mehrere virtuelle Basisstationen BS.

Die Einrichtung RNM zum Zuteilen von funktechnischen Ressourcen und mehrere Basisstationen BS bilden ein Basisstationssystem.

In FIG 1 sind beispielhaft Verbindungen V1, V2, Vk zur Übertragung von Nutzinformationen und Signalisierungsinformationen zwischen Mobilstationen MS und einer Basisstation BS dargestellt. Ein Operations- und Wartungszentrum OMC realisiert Kontroll- und Wartungsfunktionen für das Mobilfunksystem bzw. für Teile davon. Die Funktionalität dieser Struktur ist auf andere Funk-Kommunikationssysteme übertragbar, in denen die Erfindung zum Einsatz kommen kann, insbesondere für Teilnehmerzugangsnetze mit drahtlosem Teilnehmeranschluß. Auch Basisstationen, die als Heimbasisstationen im privatem Bereich eingesetzt sind ohne von der Funknetzplanung betroffen zu sein, können Verbindungen zu Mobilstationen MS aufbauen. Diese Heimbasisstationen sind an ein Festnetz angeschlossen.

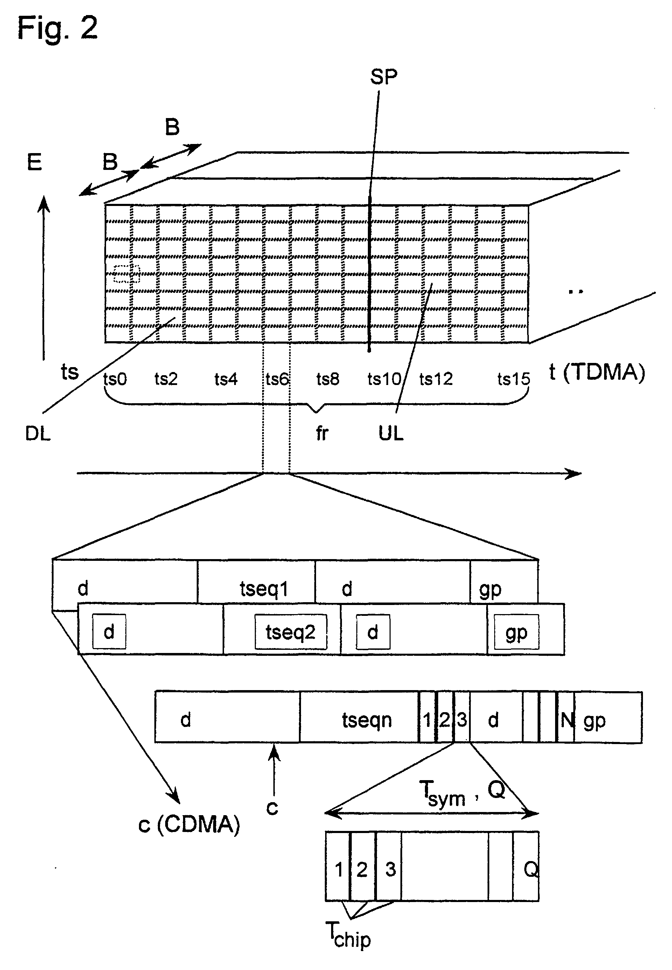

Die Rahmenstruktur der Funkübertragung ist aus FIG 2 ersichtlich. Gemäß einer TDMA-Komponente ist eine Aufteilung eines breitbandigen Frequenzbereiches, beispielsweise der Bandbreite B = 5 MHz in mehrere Zeitschlitze ts gleicher Zeitdauer, beispielsweise 16 Zeitschlitze ts0 bis ts15 vorgesehen. Ein Teil der Zeitschlitze ts0 bis ts9 werden in Abwärtsrichtung DL und ein Teil der Zeitschlitze ts10 bis ts15 werden in Aufwärtsrichtung UL benutzt. Dazwischen liegt ein Umschaltpunkt SP. Bei diesem TDD-Übertragungsverfahren entspricht das Frequenzband für die Aufwärtsrichtung UL dem Frequenzband für die Abwärtsrichtung DL. Gleiches wiederholt sich für weitere Trägerfrequenzen.

Innerhalb eines Zeitschlitzes, der zur Nutzdatenübertragung vorgesehen ist, werden Informationen mehrerer Verbindungen in Funkblöcken übertragen. Diese Funkblöcke zur Nutzdatenübertragung bestehen aus Abschnitten mit Daten d, in denen empfangsseitig bekannte Trainingssequenzen tseq1 bis tseqn eingebettet sind. Die Daten d sind verbindungsindividuell mit einer Feinstruktur, einem Teilnehmerkode c, gespreizt, so daß empfangsseitig beispielsweise n Verbindungen durch diese CDMA-Komponente separierbar sind.

Die Spreizung von einzelnen Symbolen der Daten d bewirkt, daß innerhalb der Symboldauer T_{sym} Q Chips der Dauer T_{chip} übertragen werden. Die Q Chips bilden dabei den verbindungsindividuellen Teilnehmerkode c. Weiterhin ist innerhalb des Zeitschlitzes ts eine Schutzzeit gp zur Kompensation unterschiedlicher Signallaufzeiten der Verbindungen vorgesehen.

Innerhalb eines breitbandigen Frequenzbereiches B werden die aufeinanderfolgenden Zeitschlitze ts nach einer Rahmenstruktur gegliedert. So werden 16 Zeitschlitze ts zu einem Rahmen fr zusammengefaßt.

Die verwendeten Parameter der Funkschnittstelle sind vorteilhafterweise:

| | |
|---|---|
| Chiprate | 4096 Mcps |
| Rahmendauer | 10 ms |
| Anzahl Zeitschlitze | 16 |
| Dauer eines Zeitschlitzes | 625 µs |
| Spreizfaktor | 16 |
| Modulationsart | QPSK |
| Bandbreite | 5 MHz |
| Frequenzwiederholungswert | 1 |

Diese Parameter ermöglichen eine bestmögliche Harmonisierung mit einem FDD (frequency division duplex) Modus für die 3. Mobilfunkgeneration. Vorteilhafterweise ist der Umschaltpunkt SP innerhalb einer Gruppe von Zellen gleich gewählt.

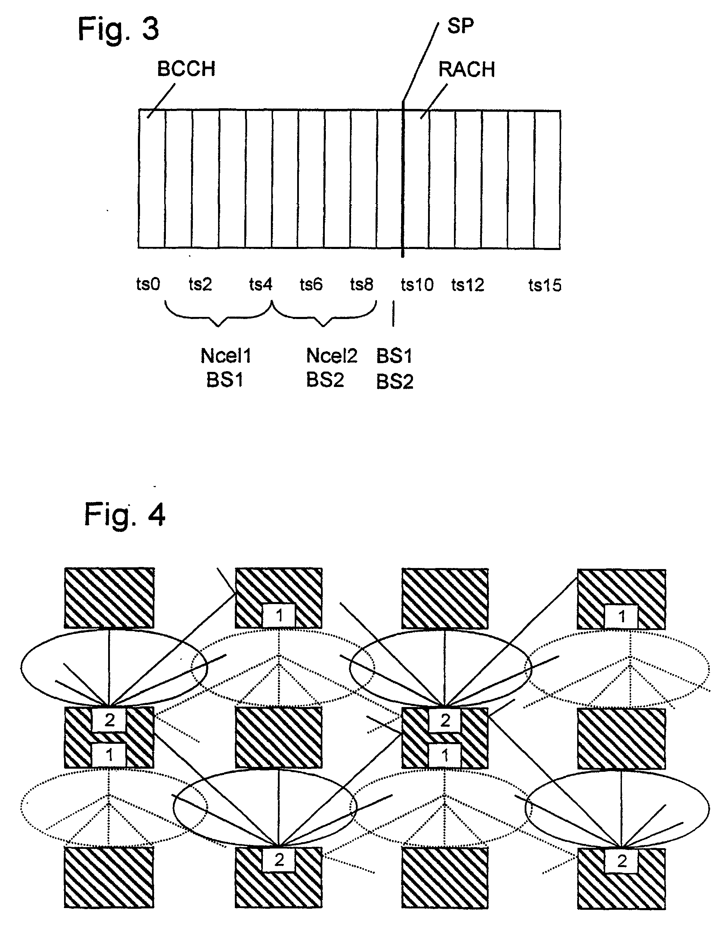

Für die Abwärtsrichtung DL wird nach FIG.3 folgende Kanalzuteilung vorgenommen. Der erste Zeitschlitz ts0 dient der Signalisierung in einem Organisationskanal BCCH. Dieser Zeitschlitz ts0 wird von mehreren Basisstationen BS1, BS2 genutzt.

Die Zeitschlitze ts1 bis ts4 sind der ersten Basisstation BS1 und die Zeitschlitze ts5 bis ts8 der zweiten Basisstation BS2 fest zugeordnet, wobei auch diese Zuordnung durch das Operations- und Wartungszentrum OMC administriert werden kann. Der darauffolgende Zeitschlitz ts9 kann dynamisch einer der Basisstationen BS1 oder BS2 zugeordnet werden. Dies erfolgt lastabhängig. Der erste Teil Ncell der Zeitschlitze ts sind also die Zeitschlitze ts1 bis ts4, der zweite Teil Ncel2 die Zeitschlitze ts5 bis ts8 und der dritte Teil Nfloat der Zeitschlitz ts9. Alternativ kann der Organisationskanal BCCH auch unmittelbar vor dem Umschaltpunkt SP eingerichtet werden. Andere Kombinationen sind entsprechend den Gegebenheiten der Netzplanung administrierbar. Der dritte Teil Nfloat ist umso größer, je ungleichmäßiger der Verkehr ist und je geringer die Gesmatverkehrslast ist. I. Katzela und M. Naghshineh, "Channel Assignment Schemes for Cellular Mobile Telecommunication Systems: A Comprehensive Survey", IEEE Personal Communications, Juni 1996, S. 19-22, zeigt Beispiele für eine angepaßte Aufteilung von Kanälen.

Nach dem Umschaltpunkt SP, der ebenfalls administrierbar ist, wird im Zeitschlitz ts10 ein Zugriffskanal RACH eingerichtet, in dem die Mobilstationen MS der Funkzellen einen Zugriffsblock zur Anforderung funktechnischer Ressourcen senden können. In Aufwärtsrichtung UL empfangen alle Basisstationen BS1, BS2 gleichzeitig, hier ist keine Aufteilung der Zeitschlitze vorgesehen.

Die Einteilung nach FIG. 3 ist insbesondere für ein Mobilfunksystem mit einer Gliederung in Mikrozellen nach FIG. 4 vorteilhaft. Durch Reflexionen bzw. besondere Antennen sind die Seitenstraßen versorgt. Bei einem Frequenzwiederholungswert von eins bezüglich der mit 1 und 2 bezeichneten Basisstationen wird ein Gruppenbildung (Cluster) mit Hilfe der zeitlichen Unterteilung vorgenommen. Aufgrund der räumlichen Anordnung der Basisstationen 1 und 2 würden zwischen den Funkzellen benachbarter Basisstationen bei einem Frequenzwiederholungswert von eins zu starke Interferenzen auftreten. Das Verfahren kann auch auf eine Gruppierung mit einem Cluster größer zwei angewendet werden. Die jeweilige Gruppierung ergibt sich aus der Morphologie und den damit verbundenen Interferenzpegeln, die von den Nachbarzellen herrühren. Je größer der Signal/Rausch-Abstand ist, um so kleiner kann die zeitliche Gruppierung ausfallen.

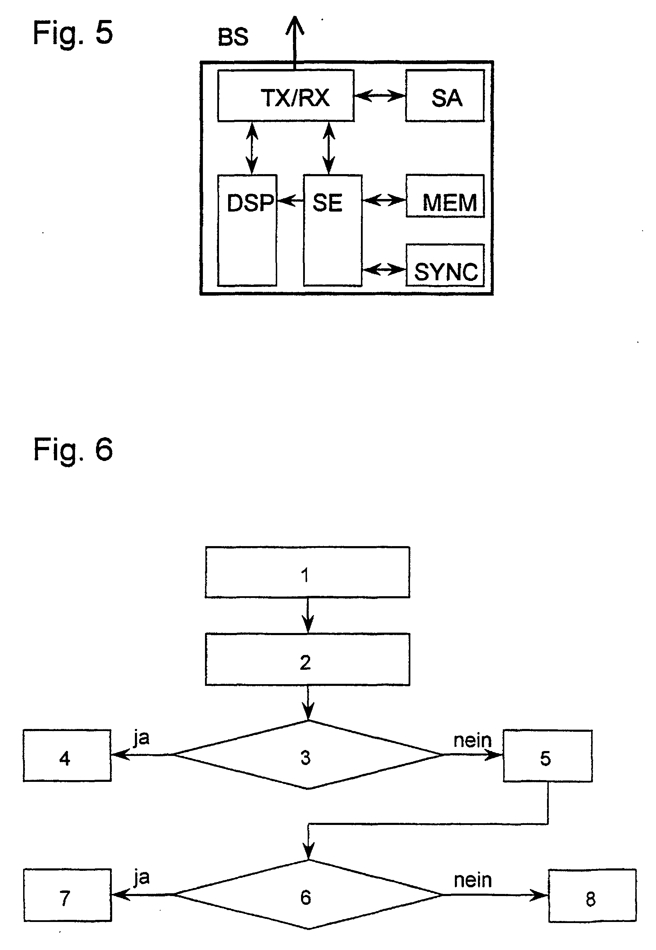

Die Kanalzuteilung wird in einer Basisstation BS nach FIG. 5 durchgeführt, wobei die Administrierung durch das Organisations- und Wartungszentrum OMC und die Vorgaben der Einrichtung RNM zur Zuteilung funktechnischer Ressourcen beachtet werden. Diese besteht aus einer Sende/Empfangseinrichtung TX/RX, die abzustrahlende Sendesignale digital/analog wandelt, vom Basisband in den Frequenzbereich der Abstahlung umsetzt und die Sendesignale moduliert und verstärkt. Eine Signalerzeugungseinrichtung SA hat zuvor die Sendesignale in Funkblöcken zusammengestellt und dem entsprechenden Frequenzband und Zeitschlitz zugeordnet. Eine Signalverarbeitungseinrichtung DSP wertet über die Sende/Empfangseinrichtung TX/RX empfangene Signale aus.

Das Zusammenwirken der Komponenten und die Einstellung des Sendezeitpunkts nach der Synchronisation wird durch eine Steuereinrichtung SE gesteuert. Zugehörige Daten über den Sende- und den Umschaltpunkt SP und die konkreten Gegebenheiten der Verbindungen werden in einer Speichereinrichtung MEM gespeichert.

Der Ablauf der Synchronisation ist FIG. 6 zu entnehmen. In einem ersten Schritt empfängt die Mobilstation MS die Signale der Organisationskanäle BCCH einer oder mehrerer Basisstationen BS1, BS2 und mißt die Interferenzen auf den verschiedenen Zeitschlitzen ts. Es wird die Funkzelle mit dem leistungsstärksten Organisationskanal BCCH ausgewählt und im Zugriffskanal BACH eine dementsprechende Anforderung zur Zuteilung funktechnischer Ressourcen gesendet.

In einem zweiten Schritt messen die Basisstationen BS1, BS2 die Signale in den Zeitschlitzen in Aufwärtsrichtung UL. Damit wird auch die Ressourcenanforderung der Mobilstation MS, beispielsweise durch die erste Basisstation BS1 erkannt.

In einem dritten Schritt wird die Entscheidung getroffen, ob eine Zuweisung eines Zeitschlitzes ts des ersten Teils Ncell der Zeitschlitz ts an die Mobilstation MS möglich ist. Ist dies durch einen ausreichenden Signal/Rauschabstand der Fall, so wird in einem vierten Schritt über einen Zuweisungskanal der Mobilstation MS ein Kanal, d.h. ein Frequenzbereich B, ein Zeitschlitz ts und ein Teilnehmerkode c, zugewiesen.

Ist dies nicht möglich, so wird in einem fünften Schritt ein Zeitschlitz ts des dritten Teils Nfloat beansprucht. In einem sechsten Schritt wird daraufhin nachgefragt, ob in diesem Zeitschlitz ts ein ausreichender Signal/Rauschabstand für die Verbindung garantiert ist. Ist dies der Fall, so wird in einem siebenten Schritt der Mobilstation MS ein Kanal in diesem Zeitschlitz ts zugewiesen. Wird zu einem späteren Zeitpunkt ein Zeitschlitz ts des ersten Teils Ncell frei bzw. für die Verbindung in ausreichend großem Maß frei, so wird eine Umverteilung auf diesen Zeitschlitz ts durchgeführt.

Steht für die Verbindung auch kein Zeitschlitz ts des dritten Teils zur Verfügung, wird die Anforderung zur Ressourcenzuteilung abgewiesen bzw. in eine Warteschlange eingereiht. Alternativ kann ein Zeitschlitz einer benachbarten Basisstation ausgeliehen werden. Dies stellt zugleich die niedrigste Prioriät dar. Es kann administriert werden, ob diese Möglichkeit eingeräumt wird.

Die Mobilstation MS und/oder die Basisstation BS werden durch eigene Interferenzmessungen und durch Interferenzmessungen der jeweils anderen Station MS, BS bei der Einbuchung und im laufenden Betrieb über die Interferenzsituation der Zeitschlitze ts in Auf- UL und Abwärtsrichtung DL informiert. So kann ein dezentrales Kanalzuteilungsverfahren realisiert werden, bei dem die bezüglich der Interferenzsituation vorteilhaften Zeitschlitze ts angefordert und zugeteilt werden.

Es wird ein virtuelles Zeitcluster eingestellt, das aufgrund der zeitlichen Orthogonalität eine Verringerung der Interzellinterferenz bewirkt, ohne dabei zu den Nachteilen der starren Kanalzuteilung, wie geringe Verkehrslast und mangelnde Unterstützung höherratiger Datendienste, zu führen. Die Vergabe von Kanälen ist priorisiert, sehr flexibel und kann eine Zellplanung mit kleinstmöglichen Frequenzwiederholungswert unterstützen. Das hybride Kanalzuteilungsverfahren schafft hinsichtlich
- geringer Blockierwahrscheinlichkeit,
- geringer Wahrscheinlichkeit eines Verbindungsabbruchs,
- geringer Signallast durch Umverteilung der Kanalzuordnung, und
- Bewältigung einer hohen Verkehrslast
eine effiziente und and die Zellenumgebung angepaßte Lösung in einem breitbandigen TDD-Mobilfunksystem.

## Patentansprüche

1. Verfahren zur Kanalzuteilung in einem Funk-Kommunikationssystem, bei dem
eine Funkübertragung nach einem TDMA-Übertragungsverfahren zwischen Mobilstationen (MS) und Basisstationen (BS, BS1, BS2) durchgeführt wird,
für Übertragungen in Abwärtsrichtung (DL) einer ersten Basisstation (BS1) und einer zweiten Basisstation (BS2) wenigstens teilweise unterschiedliche Zeitschlitze (ts) zugeteilt werden, wobei
für Übertragungen in Aufwärtsrichtung (UL) keine Aufteilung der Zeitschlitze (ts) zwischen der ersten Basisstation (BS1) und der zweiten Basisstation (BS2) erfolgt.

2. Verfahren nach Anspruch 1,
daß die Zeitschlitze (ts) eines Frequenzbandes (B) für Aufwärts- (UL) und Abwärtsrichtung (DL) gemäß einem TDD-Übertragungsverfahren benutzt werden.

3. Verfahren nach einem der vorherigen Ansprüche,
**dadurch gekennzeichnet, daß** erste (Ncel1, Ncel2) der Zeitschlitze (ts) den Basisstationen fest zugeteilt sind und weitere (Nfloat) der Zeitschlitze (ts) dynamisch zugeteilt werden.

4. Verfahren nach Anspruch 3, **dadurch gekennzeichnet, daß** die weiteren (Nfloat) der Zeitschlitze (ts) mehreren Basisstationen (BS) lastbezogen zugeteilt werden.

5. Verfahren nach einem der vorherigen Ansprüche,
**dadurch gekennzeichnet,**
**daß** eine Zuteilung eines Zeitschlitzes (ts) der weiteren (Nfloat) Zeitschlitze für die Mobilstation (MS) mit höherer Priorität erfolgt als eine Übergabe zu einer benachbarten Basisstation (BS2).

6. Verfahren nach einem der vorherigen Ansprüche,
**dadurch gekennzeichnet,**
**daß** durch die Basisstation (BS) und/oder die Mobilstation (MS) Interferenzmessungen durchgeführt werden, so daß ein geeigneter Zeitschlitz (ts) für eine Verbindung ausgewählt wird bzw. bei einer Freigabe eines Zeitschlitzes (ts) durch eine andere Verbindung eine Übergabe der Verbindung zu -diesem Zeitschlitz (ts) ausgelöst wird.

7. Verfahren nach einem der vorherigen Ansprüche,
**dadurch gekennzeichnet,**
**daß** benachbarte Basisstationen (BS1, BS2) das gleiche Frequenzband (B) benutzen.

8. Verfahren nach einem der vorherigen Ansprüche,
**dadurch gekennzeichnet,**
**daß** für die Funkübertragung ein TDMA/CDMA-Teilnehmerseparierungsverfahren benutzt wird.

9. Basisstationssystem für ein Funk-Kommunikationssystem, mit einer ersten und einer zweiten Basisstation (BS1, BS2), die eine Funkübertragung nach einem TDMA-Übertragungsverfahren zu Mobilstationen (MS) durchführen, wobei Zeitschlitze (ts) eines Frequenzbandes (B) für Aufwärts-( UL) und Abwärtsrichtung (DL) benutzt werden,
mit einer Einrichtung (RNM) zum Zuteilen funktechnischer Ressourcen, die für Übertragungen in Abwärtsrichtung (DL) der ersten Basisstation (BS1) und der zweiten Basisstation (BS2) wenigstens teilweise unterschiedliche Zeitschlitze (ts) zuteilt und die für Übertragungen in Aufwärtsrichtung (UL) keine Aufteilung der Zeitschlitze (ts) zwischen der ersten Basisstation (BS1) und der zweiten Basisstation (BS2) vornimmt.

## Claims

1. Method for channel allocation in a radio communications system, in which
radio transmission is carried out in accordance with a TDMA transmission method between mobile stations (MS) and base stations (BS, BS1, BS2),
at least partially different timeslots (ts) are allocated to a first base station (BS1) and to a second base station (BS2) for transmissions in the downlink direction (DL),
in which case no splitting of the timeslots (ts) is carried out between the first base station (BS1) and the second base station (BS2) for transmissions in the uplink direction (UL).

2. Method according to Claim 1,
**characterized in that** the timeslots (ts) in one frequency band (B) are used for the uplink direction (UL) and the downlink direction (DL) in accordance with a TDD transmission method.

3. Method according to one of the preceding claims,
**characterized in that** first (Ncel1, Ncel2) timeslots (ts) are permanently allocated to the base stations, and further (Nfloat) timeslots (ts) are allocated dynamically.

4. Method according to Claim 3, **characterized**
**in that** the further (Nfloat) timeslots (ts) are allocated to a plurality of base stations (BS) on a load-related basis.

5. Method according to one of the preceding claims,
**characterized**
**in that** one timeslot (ts) of the further timeslots (Nfloat) for the mobile station (MS) is allocated with a higher priority than a handover to an adjacent base station (BS2).

6. Method according to one of the preceding claims,
**characterized**
**in that** interference measurements are carried out by the base station (BS) and/or by the mobile station (MS), so that a suitable timeslot (ts) for a connection is selected and, when a timeslot (ts) is released by another connection, a handover of the connection to this timeslot (ts) is initiated.

7. Method according to one of the preceding claims,
**characterized**
**in that** adjacent base stations (BS1, BS2) use the same frequency band (B).

8. Method according to one of the preceding claims,
**characterized**
**in that** a TDMA/CDMA -subscriber separation method is used for radio transmission.

9. Base station system for a radio communications system, having a first and a second base station (BS1, BS2) which carry out a radio transmission to mobile stations (MS) in accordance with a TDMA transmission method, in which case timeslots (ts) in one frequency band (B) are used for the uplink direction (UL) and downlink direction (DL),
having a device (RNM) for allocating radio resources, which device allocates at least partially different timeslots (ts) for transmissions in the downlink direction (DL) to the first base station (BS1) and to the second base station (BS2), and which device does not split the timeslots (ts) between the first base station (BS1) and the second base station (BS2) for transmissions in the uplink direction (UL).

## Revendications

1. Procédé pour l'affectation de canaux dans un système de radiocommunication, dans lequel
une transmission radio selon un procédé de transmission TDMA est réalisée entre des stations mobiles (MS) et des stations de base (BS, BS1, BS2),
pour les transmissions en direction descendante (DL) d'une première station de base (BS1) et d'une seconde station de base (BS2), des créneaux temporels au moins partiellement différents (ts) sont affectés,
aucune répartition des créneaux temporels (ts) entre la première station de base (BS1) et la seconde station de base (BS2) n'étant réalisée pour les transmissions en direction ascendante (UL).

2. Procédé selon la revendication 1, **caractérisé en ce que** les créneaux temporels (ts) d'une bande de fréquences (B) sont utilisés pour la direction ascendante (UL) et pour la direction descendante (DL), conformément à un procédé de transmission TDD.

3. Procédé selon l'une des revendications précédentes, **caractérisé en ce que** des premiers (Ncel1, Ncel2) créneaux temporels (ts) sont fixement affectés aux stations de base et des créneaux temporels (ts) suivants (Nfloat) sont affectés de manière dynamique.

4. Procédé selon la revendication 3, **caractérisé en ce que** les créneaux temporels (ts) suivants (Nfloat) sont affectés à plusieurs stations de base (BS), en fonction de la charge.

5. Procédé selon l'une des revendications précédentes, **caractérisé en ce qu'**une affectation d'un créneau temporel (ts) des créneaux temporels suivants (Nfloat) pour les stations mobiles (MS) est réalisée avec une priorité supérieure à celle de la transmission vers une station de base voisine (BS2).

6. Procédé selon l'une des revendications précédentes, **caractérisé en ce qu'**on procède à des mesures d'interférences au moyen de a station de base (BS) et/ ou la station mobile (MS )de telle sorte à ce qu'un créneau temporel (ts) adéquat soit sélectionné pour une communication resp.à ce qu'un transfert de la communication vers un créneau temporel (ts) soit déclenché , lors de la libération dudit créneau temporel (ts) par une autre communication.

7. Procédé selon l'une des revendications précédentes, **caractérisé en ce que** des stations de base voisines (BS1, BS2) utilisent la même bande de fréquences (B).

8. Procédé selon l'une des revendications précédentes, **caractérisé en ce qu'**un procédé TDMA/CDMA de séparation d'abonnés est utilisé pour la transmission radio.

9. Station de base pour un système de radiocommunication, comprenant une première et une seconde station de base (BS1, BS2), qui procèdent à une transmission radio vers des stations mobiles (MS), selon un procédé de transmission TDMA, des créneaux temporels (ts) d'une bande de fréquences (B) étant utilisés pour la direction ascendante (UL) et pour la direction descendante (DL),
avec un système (RNM) pour l'affectation des ressources radiotechniques, qui pour les transmissions en direction descendante (DL) de la première station de base (BS1) et de la seconde station de base (BS2) affecte des créneaux temporels (ts) au moins partiellement différents et qui pour les transmissions en direction ascendante (UL) ne procède à aucune répartition des créneaux temporels (ts) entre la première station de base (BS1) et la seconde station de base (BS2).
